# EUROPÄISCHE PATENTSCHRIFT

(11) **EP 3 124 349 B1**
(45) Veröffentlichungstag und Bekanntmachung des Hinweises auf die Patenterteilung: **11.08.2021**
(21) Anmeldenummer: 16174210.1
(22) Anmeldetag: 13.06.2016
(51) Int. Cl.: B60W 50/10, B60Q 1/00, B60K 35/00

(54) **VERFAHREN UND VORRICHTUNG ZUM ERKENNEN EINER ABSICHT EINES FAHRERS EINES FAHRZEUGS BEZÜGLICH EINES AUSFÜHRENS EINER SPURWECHSELAKTION UND/ODER EINER ABBIEGEAKTION DES FAHRZEUGS SOWIE BEDIENELEMENT**
METHOD AND DEVICE FOR DETECTING THE INTENTION OF A DRIVER OF A VEHICLE WITH RESPECT TO THE VEHICLE CHANGING LANE AND/OR TURNING OFF AND CORRESPONDING OPERATING ELEMENT
PROCÉDÉ ET DISPOSITIF DE RECONNAISSANCE D'UNE INTENTION D'UN CONDUCTEUR D'UN VÉHICULE PAR RAPPORT A L'EXÉCUTION D'UNE ACTION DE CHANGEMENT DE VOIE ET/OU D'UNE ACTION DE CHANGEMENT DE DIRECTION DU VÉHICULE ET ÉLÉMENT DE COMMANDE

(30) Priorität: 29.07.2015 DE 102015214393
(43) Veröffentlichungstag der Anmeldung: 01.02.2017
(73) Patentinhaber: Robert Bosch GmbH, 70442 Stuttgart (DE)
(72) Erfinder: Freienstein, Heiko, 71263 Weil Der Stadt (DE); Moennich, Joerg, 70437 Stuttgart (DE)

(56) Entgegenhaltungen:
- WO-A1-2014/086384
- DE-A1-102012 004 636
- JP-A- 2012 201 330

## Beschreibung

### Stand der Technik

Die Erfindung geht aus von einem Verfahren oder einer Vorrichtung oder einem Bedienelement nach Gattung der unabhängigen Ansprüche. Gegenstand der vorliegenden Erfindung ist auch ein Computerprogramm.

Fahrzeugmanöver wie ein Spurwechsel oder ein Abbiegevorgang erfordern die volle Konzentration des Fahrers eines Fahrzeugs und sind häufige Ursache von Unfällen. Hier ist es vorteilhaft, wenn Fahrerassistenz- oder -sicherheitssysteme möglichst frühzeitig unterstützend oder unfallvermeidend eingreifen können.

Die Druckschrift DE 102012 004636 A1 offenbart eine berührungssensitive Bedieneinrichtung für ein Kraftfahrzeug und Kraftfahrzeug.

Die Druckschrift WO 2014/086384 A1 offenbart eine Fahrzeuganordnung, ein Verfahren und ein Computerprogramm zur teuerung einer Fahrzeuganordnung.

Die Druckschrift JP 2012-201330 A offenbart ein Bordgerät zur Funktionsunterstützung.

### Offenbarung der Erfindung

Vor diesem Hintergrund werden mit dem hier vorgestellten Ansatz ein Verfahren zum Erkennen einer Absicht eines Fahrers eines Fahrzeugs bezüglich eines Ausführens einer Spurwechselaktion und/oder einer Abbiegeaktion des Fahrzeugs, eine Vorrichtung, die dieses Verfahren verwendet, weiterhin ein Bedienelement sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Eine Ableitung einer Absicht eines Fahrzeugführers zum Ausführen einer Spurwechselaktion und/oder einer Abbiegeaktion aus einer einem Bedienelement bzw. Lenkstockhebel des Fahrzeugs zugeordneten Bedienhandlung des Fahrers kann helfen, eine situative Unschärfe bezüglich der Spurwechselaktion und/oder der Abbiegeaktion zu vermindern.

Mit einer gemäß dem hier vorgestellten Konzept realisierbaren präzisen Fahrerwunscherkennung kann das sogenannte Warndilemma, von dem Fahrerassistenz- und -sicherheitssysteme in Fahrzeugen betroffen sein können, vermindert oder sogar ausgeschaltet werden, indem Warnfunktionen des Sicherheits- oder Assistenzsystems deutlich spezifischer zur Wirkung kommen können, ohne dass dabei der Fahrer bzw. Insasse gestört wird. Durch die gemäß dem vorgeschlagenen Ansatz realisierbare intuitive Kopplung von Bedienung und Funktion sind auch ältere Personen ohne Weiteres in der Lage, das neue System zu nutzen.

Es wird ein Verfahren zum Erkennen einer Absicht eines Fahrers eines Fahrzeugs bezüglich eines Ausführens einer Spurwechselaktion und/oder einer Abbiegeaktion des Fahrzeugs vorgestellt, wobei das Verfahren die folgenden Schritte aufweist:
Einlesen eines Betätigungsintentionssignals, das eine Bewegung einer Hand oder eines Fingers des Fahrers in Bezug zu einem Lenkstockhebel für eine Fahrtrichtungsanzeige des Fahrzeugs mit der Intention, den Lenkstockhebel bzw. das Bedienelement zum Anzeigen der Absicht zu betätigen, repräsentiert; und

Ermitteln eines Absichtsinformationssignals unter Verwendung des Betätigungsintentionssignals, wobei das Absichtsinformationssignal eine Information über die Absicht des Fahrers repräsentiert.

Die Absicht des Fahrers kann einem Wunsch des Fahrers oder einem aktuellen Erfordernis entsprechen, einen Spurwechsel zu einer benachbarten Fahrspur oder einen Abbiegevorgang - z. B. zum Einmünden in eine weitere Straße - auszuführen. Die Spurwechselaktion kann beispielsweise einen Überholvorgang zum Überholen eines weiteren Fahrzeugs einleiten oder abschließen. Bei dem Betätigungsintentionssignal und dem Absichtsinformationssignal kann es sich um elektrische Signale handeln. Unter dem Bedienelement kann hier insbesondere ein Bedienelement für Fahrtrichtungsanzeiger oder ein Lenkstockhebel für eine Fahrtrichtungsanzeige bzw. ein Blinkerhebel des Fahrzeugs verstanden werden. Bei der Bewegung kann es sich um eine Bewegung der Hand oder des Fingers des Fahrers zwischen einer Ruheposition am Lenkrad und dem Lenkstockhebel handeln. Das Betätigen des Bedienelements kann in einem Hochdrücken des Bedienelements mit der Hand oder dem Finger zum Anzeigen einer geplanten oder bereits begonnenen Fahrtrichtungsänderung des Fahrzeugs nach rechts bestehen. Alternativ kann das Betätigen des Bedienelements in einem Herunterdrücken mit der Hand oder dem Finger zum Anzeigen einer geplanten oder bereits begonnenen Fahrtrichtungsänderung des Fahrzeugs nach links bestehen. Die mittels des Absichtsinformationssignals repräsentierte Information kann zum Inhalt haben, dass der Fahrer im Begriff ist, das Bedienelement zu betätigen, wobei die Information insbesondere eine Aussage darüber enthält, ob der Fahrer das Bedienelement demnächst nach oben oder nach unten drücken wird.

Das Verfahren kann beispielsweise in Software oder Hardware oder in einer Mischform aus Software und Hardware beispielsweise in einer Vorrichtung des Fahrzeugs implementiert sein.

Gemäß einer Ausführungsform weist das Verfahren einen Schritt des Bereitstellens des Absichtsinformationssignals an ein Informationssystem und/oder Assistenzsystem und/oder Sicherheitssystem des Fahrzeugs auf. So kann das Informationssystem und/oder Assistenzsystem und/oder Sicherheitssystem frühzeitig auf die bevorstehende Spurwechsel- oder Abbiegeaktion eingestellt werden und eventuell erforderliche Maßnahmen mit möglichst wenig Zeitverzug einleiten.

Gemäß der Erfindung weist das Verfahren ferner einen Schritt des Erzeugens des Betätigungsintentionssignals mittels zumindest eines an dem Bedienelement angeordneten oder anordenbaren Sensors aufweisen. Der Sensor ist ausgebildet, um das Betätigungsintentionssignal zu erzeugen, wenn ein vordefinierter Annäherungsschwellenwert für eine Annäherung der Hand oder des Fingers an das Bedienelement und/oder ein vordefinierter Druckschwellenwert für einen mittels der Hand oder des Fingers auf das Bedienelement ausgeübten Druck überschritten wird. So kann eine kurz bevorstehende Betätigung des Bedienelements direkt, sicher und robust erfasst werden.

Beispielsweise kann in dem Schritt des Erzeugens ein kapazitiver Sensor oder ein optoelektronischer Sensor oder ein Ultraschallsensor oder ein Radarsensor als der Sensor zum Erzeugen des Betätigungsintentionssignals eingesetzt werden. So kann die bevorstehende Betätigung des Bedienelements vorteilhafterweise kostengünstig und mit geringem Rechenaufwand detektiert werden.

Gemäß der Erfindung wird als der Annäherungsschwellenwert und/oder der Druckschwellenwert ein mit einer Hysterese beaufschlagter Schwellenwert verwendet. So können schnelle Wechsel bei der Ermittlung des Absichtsinformationssignals vermieden oder reduziert werden.

Auch können der Schritt des Erzeugens des Betätigungsintentionssignals und der Schritt des Einlesens des Betätigungsintentionssignals wiederholt ausgeführt werden, bevor der Schritt des Ermitteins des Absichtsinformationssignals ausgeführt wird. In dem Schritt des Ermitteins kann das Absichtsinformationssignal entsprechend unter Verwendung einer Mehlzahl der Betätigungsintentionssignale ermittelt werden. Damit kann vorteilhafterweise eine stufenlose Erfassung der Bewegung der Hand oder des Fingers des Fahrers in Bezug zu dem Bedienelement gewährleistet werden.

Insbesondere kann in dem Schritt des Erzeugens das Betätigungsintentionssignal als ein Betätigungsintentionssignal erzeugt werden, das die Bewegung der Hand oder des Fingers des Fahrers als eine zu einem Dach des Fahrzeugs gerichtete Bewegung zum Setzen eines in einer Fahrtrichtung des Fahrzeugs rechtsseitigen Fahrtrichtungsanzeigers des Fahrzeugs identifiziert. Dabei kann ein bei im Fahrzeug montiertem Bedienelement an einer Unterseite des Bedienelements angeordneter oder anordenbarer Sensor den Sensor repräsentieren. Mit dieser Ausführungsform des Verfahrens kann ein bevorstehender Fahrtrichtungswechsel des Fahrzeugs nach rechts frühzeitig antizipiert werden.

Alternativ kann in dem Schritt des Erzeugens das Betätigungsintentionssignal als ein Betätigungsintentionssignal erzeugt werden, das die Bewegung der Hand oder des Fingers des Fahrers als eine zu einem Boden des Fahrzeugs gerichtete Bewegung zum Setzen eines in der Fahrtrichtung des Fahrzeugs linksseitigen Fahrtrichtungsanzeigers des Fahrzeugs identifiziert. Hier kann ein bei im Fahrzeug montiertem Bedienelement an einer Oberseite des Bedienelements angeordneter oder anordenbarer weiterer Sensor den Sensor repräsentieren. So kann vorteilhafterweise ein bevorstehender Fahrtrichtungswechsel des Fahrzeugs nach links frühzeitig antizipiert werden.

Gemäß einer weiteren Ausführungsform kann das Verfahren einen Schritt des Einlesens eines Aktionsbeendigungssignals, das eine zu der Bewegung entgegengesetzte weitere Bewegung der Hand oder des Fingers des Fahrers des Fahrzeugs in Bezug zu dem Bedienelement mit der Intention, das Bedienelement zum Beenden des Anzeigens der Absicht freizugeben, repräsentiert und einen Schritt des Ermitteins eines Beendigungsinformationssignals unter Verwendung des Aktionsbeendigungssignals, wobei das Beendigungsinformationssignal eine Information über das Beenden des Anzeigens der Absicht durch den Fahrer repräsentiert, und einen Schritt des Bereitstellens des Aktionsbeendigungssignals an ein Informationssystem und/oder Assistenzsystem und/oder Sicherheitssystem des Fahrzeugs aufweisen. Vorteilhafterweise können so die Ressourcen des Informationssystems und/oder Assistenzsystems und/oder Sicherheitssystems frühzeitig für weitere Aufgaben des jeweiligen Systems eingesetzt werden.

Gemäß einer Ausführungsform kann das Verfahren einen Schritt des Erzeugens des Aktionsbeendigungssignals mittels des zumindest einen an dem Bedienelement angeordneten oder anordenbaren Sensors aufweisen. Der Sensor kann ausgebildet sein, um das Aktionsbeendigungssignal zu erzeugen, wenn der vordefinierte Annäherungsschwellenwert für eine Annäherung der Hand oder des Fingers an das Bedienelement und/oder der vordefinierte Druckschwellenwert für einen mittels der Hand oder des Fingers auf das Bedienelement ausgeübten Druck unterschritten wird. Mit dieser Ausführungsform des Verfahrens kann ein Freigeben des Bedienelements durch den Fahrer direkt, sicher und robust erfasst werden.

Es wird ferner eine Vorrichtung vorgestellt, die eingerichtet ist, das Verfahren gemäß einer der der im Vorangegangenen angeführten Ausführungsformen auszuführen.

Die Vorrichtung kann ausgebildet sein, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Es wird weiterhin ein Bedienelement zum Betätigen einer Fahrtrichtungsanzeige eines Fahrzeugs vorgestellt, wobei das Bedienelement die folgenden Merkmale aufweist:
eine Vorrichtung wie oben beschrieben; und
zumindest einen Sensor, der bei im Fahrzeug montiertem Bedienelement an einer Unterseite oder einer Oberseite des Bedienelements angeordnet oder anordenbar ist.

Zum Anzeigen einer bevorstehenden oder bereits eingeleiteten Fahrtrichtungsänderung des Fahrzeugs kann das Bedienelement mit einem Schalter der Fahrtrichtungsanzeige gekoppelt oder koppelbar sein.

Schließlich wird ein System zum Verarbeiten einer Absicht eines Fahrers eines Fahrzeugs bezüglich eines Ausführens einer Spurwechselaktion und/oder einer Abbiegeaktion des Fahrzeugs vorgestellt, wobei das System die folgenden Merkmale aufweist:
eine Vorrichtung wie oben beschrieben; und
ein Informationssystem und/oder Assistenzsystem und/oder Sicherheitssystem, das mit der Vorrichtung gekoppelt oder koppelbar ist und ausgebildet ist, um abhängig von einem mittels der Vorrichtung bereitgestellten Absichtsinformationssignal ein Reaktionsmuster auszuführen.

Beispielsweise kann das Reaktionsmuster ausgebildet sein, um eine Unfallgefahr infolge der Spurwechselaktion und/oder Abbiegeaktion zu reduzieren oder das Verkehrsgeschehen für die Beteiligten flüssiger und angenehmer zu gestalten.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:
Fig. 1 ein Diagramm zur Darstellung einer zeitlichen Analyse der Bedienphasen im Ausführen einer Spurwechselaktion und/oder Abbiegeaktion eines Fahrzeugs gemäß einem Ausführungsbeispiel;
Fig. 2 eine schematische Darstellung eines Fahrzeugs mit einem System zum Verarbeiten einer Absicht eines Fahrers des Fahrzeugs bezüglich eines Ausführens einer Spurwechselaktion und/oder Abbiegeaktion des Fahrzeugs gemäß einem Ausführungsbeispiel;
Fig. 3 eine schematische Darstellung eines Lenkrads mit einem Bedienelement gemäß einem Ausführungsbeispiel;
Fig. 4 ein Ablaufdiagramm eines Verfahrens zum Erkennen einer Absicht eines Fahrers eines Fahrzeugs bezüglich eines Ausführens einer Spurwechselaktion und/oder einer Abbiegeaktion des Fahrzeugs gemäß einem Ausführungsbeispiel;
Fig. 5 ein Schema zur Veranschaulichung einer Beziehung zwischen Sensorsignalen und Absichtsinformationssignalen im Ausführen des Verfahrens aus Fig. 4 gemäß einem Ausführungsbeispiel; und
Fig. 6 bis 10 Darstellungen typischer Hand- bzw. Fingerbewegungen der Vorbetätigung zum Bedienen eines Bedienelements zum Anzeigen einer Spurwechselaktion und/oder einer Abbiegeaktion eines Fahrzeugs gemäß Ausführungsbeispielen.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

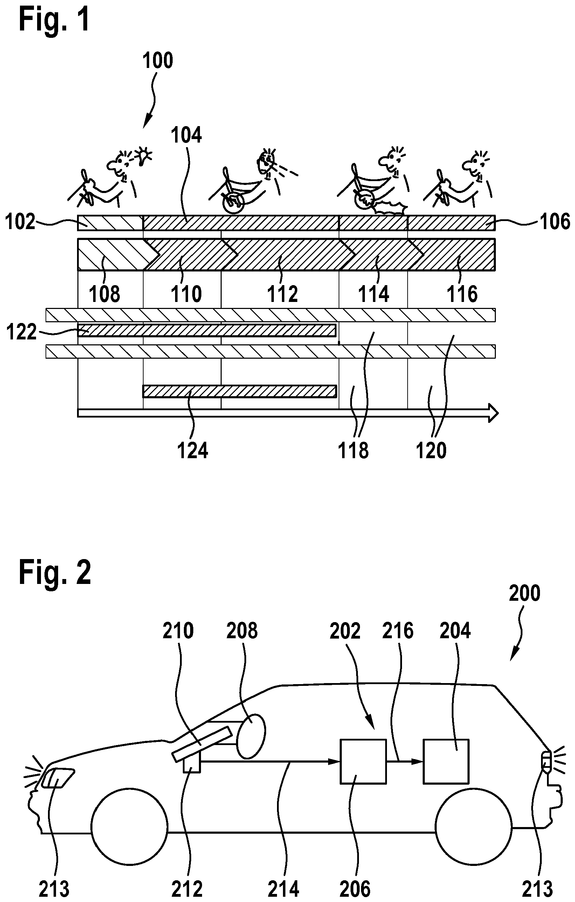

Fig. 1 zeigt ein Diagramm zur Darstellung einer zeitlichen Analyse der Bedienphasen im Ausführen einer Spurwechselaktion bzw. Abbiegeaktion durch einen Fahrer 100 eines Fahrzeugs gemäß einem Ausführungsbeispiel. Ein mittels eines Pfeils in der Darstellung gekennzeichneter Zeitstrang gliedert sich in eine erste Phase 102 der Entstehung der Absicht zum Ausführen einer Spurwechsel- bzw. Abbiegeaktion, eine zweite Phase 104 der Handlung, in der die Spurwechsel- bzw. Abbiegeaktion ausgeführt wird, und eine dritte Phase 106 mit einem Ergebnis der Spurwechsel- bzw. Abbiegeaktion.

In der ersten Phase 102 entsteht ein Gedanke zu einer Fahraufgabe 108, z. B. ein Überholwunsch.

Die zweite Phase 104 unterteilt sich in einen ersten zeitlichen Teilabschnitt 110 des Bedienweges, einen zweiten zeitlichen Teilabschnitt 112 einer eventuellen Wartezeit und einen dritten zeitlichen Teilabschnitt 114 der tatsächlichen Bedienung.

In dem ersten zeitlichen Teilabschnitt 110 erfolgt eine Handbewegung des Fahrers 100 von einer Ruhestellung am Lenkrad zu einem am Lenkstock angeordneten Bedienelement zum Einleiten des Anzeigens der in der ersten Phase 102 entstandenen Absicht. Das Bedienelement ist hier als Lenkstockhebel - auch Blinkerhebel genannt - ausgebildet und wird im Folgenden, ohne Beschränkung der Allgemeinheit auf beliebige anders ausgestaltete Bedienelemente, auch so genannt. Im zweiten zeitlichen Teilabschnitt 112 wartet der Fahrer 100 auf eine Zeitlücke und führt in der Regel mehrere Kontroll- bzw. Schulterblicke zum Überblicken der aktuellen Verkehrssituation aus. Im dritten zeitlichen Teilabschnitt 114 wird der Lenkstockhebel betätigt, beispielsweise bis er in einer von zwei Richtungsanzeigestellungen einrastet.

In der dritten Phase 106 erfolgt eine Durchführung 116 der geplanten Fahraufgabe 108. Beispielsweise wird nach einem Schulterblick ein Überholmanöver ausgeführt.

Dem Fahrzeug zugeordnete Fahrerassistenz- bzw. -sicherheitssysteme haben die Aufgabe, verschiedene, auf die Spurwechsel- bzw. Abbiegeaktion bezogene Maßnahmen einzuleiten, beispielsweise, um eine Kollisionsgefahr während der Spurwechsel- bzw. Abbiegeaktion zu verringern. Im Stand der Technik werden die erste Phase 102 sowie die Teilabschnitte 110 und 112 zur Ermittlung der optimal geeigneten Maßnahme nicht berücksichtigt, sondern es erfolgt eine Analyse 118 der Blinkerstellung parallel zum dritten zeitlichen Teilabschnitt der Bedienung 114 und eine Analyse 120 des Fahrmanövers parallel zu der dritten Phase 106 des Ergebnisses des Fahrerwunsches.

Eventuell kann in den Zeitphasen bzw. -abschnitten 102, 110 und 112 auf eine Videoüberwachung des Fahrzeuginnenraums bzw. des Fahrers 100 mit Fahrzeugkameras zurückgegriffen zu werden, um unterstützende Informationen über die Intention des Fahrers 100 zu erhalten. Eine derartige Sensierung robust umzusetzen, erfordert jedoch eine hochwertige Sensorik und eine aufwendige - z. B. auf Mustererkennung basierende - Signalverarbeitung. Ein erster Balken in der Darstellung in Fig. 1 illustriert eine Zeitdifferenz 122 zwischen der Entstehung des Fahrerwunsches in Phase 102 und der Erkennung des Fahrerwunsches durch das Fahrerassistenz- bzw. -sicherheitssystem im Zeitabschnitt 114.

Gemäß dem hier vorgestellten Konzept der verbesserten Fahrerwunscherkennung bei Spurwechsel- oder Abbiegevorgängen erfassen im oder nahe dem Lenkstockhebel verbaute Sensoren die Hand- bzw. Fingerbewegungen des Fahrers 100, die der tatsächlichen Betätigung des Lenkstockhebels in dem Zeitabschnitt 114 vorausgehen.

Damit verschafft ein gemäß dem hier vorgeschlagenen Ansatz umgesetztes System dem Fahrerassistenz- bzw. -sicherheitssystem einen - mittels eines zweiten Balkens in der Darstellung illustrierten - relevanten Zeitgewinn 124, indem bereits die Bewegung zum Blinkerhebel hin und das Hand- bzw. Fingerauflegen auf den Blinkerhebel, ohne zu schalten, in den Zeitabschnitten 110 und 112 in die Fahrerintentionsbestimmung einbezogen werden, also eine Analyse der intuitiven Geste vor der Blinkerschaltung in dem Zeitabschnitt 114 stattfindet.

Ergänzend wird dann wie im Stand der Technik die Analyse 118 der Blinkerstellung parallel zum dritten zeitlichen Teilabschnitt der Bedienung 114 und die Analyse 120 des Fahrmanövers in der Zeitphase 106 durchgeführt.

Fig. 2 zeigt eine schematische Darstellung eines Fahrzeugs 200 mit einem System 202 zum Verarbeiten einer Absicht eines Fahrers des Fahrzeugs 200 bezüglich eines Ausführens einer Spurwechselaktion und/oder Abbiegeaktion gemäß einem Ausführungsbeispiel. Bei dem Fahrzeug 200 handelt es sich um ein straßengebundenes Fahrzeug wie einen Personen- oder Lastkraftwagen.

Das System 202 setzt sich aus einem Informationssystem und/oder Assistenzsystem und/oder Sicherheitssystem 204 des Fahrzeugs 200 sowie einer Vorrichtung 206 zusammen.

Gezeigt sind in Fig. 2 ferner ein Lenkrad 208 des Fahrzeugs 200, ein an einem Lenkstock des Fahrzeugs 200 angeordneter Lenkstockhebel 210 bzw. Blinkerhebel 210 oder Bedienelement 210 für eine Fahrtrichtungsanzeige des Fahrzeugs 200 und ein Sensor 212 zum Erfassen einer Hand- bzw. Fingerbewegung des Fahrers des Fahrzeugs 200 in Bezug zu dem Lenkstockhebel 210. Beispielhaft sind auch zwei von vier Fahrtrichtungsanzeigern 213 des Fahrzeugs 200 gezeigt. Die Fahrtrichtungsanzeiger 213 - im Folgenden auch als Blinker 213 bezeichnet - repräsentieren hier die linksseitigen Fahrtrichtungsanzeiger des Fahrzeugs 200 sind über elektrische Leitungen mit dem Lenkstockhebel 210 verbunden. Sie werden aktiviert und blinken, wenn der Fahrer des Fahrzeugs 200 den Lenkstockhebel 210 betätigt, in diesem Fall nach unten drückt.

Die Vorrichtung 206 kann Teil des Systems 204 oder des Lenkstockhebels 210 sein oder über elektrische Leitungen mit dem System 204 oder dem Lenkstockhebel 210 verbunden sein.

Bei dem in Fig. 2 gezeigten Ausführungsbeispiel ist der Sensor 212 am freien Ende des Lenkstockhebels 210 angeordnet. Alternativ kann der Sensor 212 auch separat vom Lenkstockhebel 210 verbaut sein, beispielsweise im Lenkstock oder im Armaturenbereich des Fahrzeugs 200.

Die Vorrichtung 206 ist ausgebildet, um eine Absicht des Fahrers bezüglich eines Ausführens einer Spurwechselaktion und/oder Abbiegeaktion zu erkennen und ist dazu über eine geeignete Schnittstelle mit dem Sensor 212 verbunden. Über die Schnittstelle liest die Vorrichtung 206 ein von dem Sensor 212 erzeugtes Betätigungsintentionssignal 214 ein. Das Betätigungsintentionssignal 214 repräsentiert eine Bewegung einer Hand oder eines Fingers des Fahrers in Bezug zu dem Lenkstockhebel 210 mit der Intention, den Lenkstockhebel 210 zum Anzeigen der Absicht zu betätigen.

Die Vorrichtung 206 ist ferner ausgebildet, um mittels eines geeigneten Algorithmus unter Verwendung des Betätigungsintentionssignals 214 ein Absichtsinformationssignal 216 zu ermitteln und über eine weitere geeignete Schnittstelle an das Informationssystem und/oder Assistenzsystem und/oder Sicherheitssystem 204 des Fahrzeugs 200 bereitzustellen. Das Absichtsinformationssignal 216 repräsentiert eine Information über die Absicht des Fahrers.

Das Informationssystem und/oder Assistenzsystem und/oder Sicherheitssystem 204 ist ausgebildet, um in Abhängigkeit von der mit dem Absichtsinformationssignal 216 übermittelten Information über die Absicht des Fahrers ein geeignetes Reaktionsmuster auszuführen.

Handelt es sich beispielsweise bei der aus dem Absichtsinformationssignal 216 abgeleiteten Information um eine Information über einen bevorstehenden Spurwechsel nach links oder rechts oder einen bevorstehenden Abbiegevorgang, kann das System 204, das beispielsweise als ein Assistenzsystem 204 ausgeführt ist, eine automatische Anpassung des HMI bzw. der Mensch-Maschine-Schnittstelle vornehmen, indem Informationen über blinde Bereiche auf geeigneten Ausgabegeräten des Fahrzeugs 200 angezeigt werden. Hierbei kann es sich um Bilder von Rück- und Seitenkameras des Fahrzeugs 200 oder um Messungen durch Radar oder Ultraschall handeln. Als geeignete Ausgabegeräte sind ein Head-Up-Display, ein Head-Unit-Display oder weitere Anzeigeelemente, z. B. das Kombiinstrument des Fahrzeugs 200, denkbar.

Handelt es sich bei der aus dem Absichtsinformationssignal 216 abgeleiteten Information alternativ um eine Information über einen bevorstehenden Überholvorgang, kann das Assistenzsystem 204 mit einer Information oder Warnung an entgegenkommende weitere Fahrzeuge reagieren; beispielsweise können weitere Verkehrsteilnehmer über Car2X über bevorstehende Aktionen informiert werden.

Handelt es sich bei der aus dem Absichtsinformationssignal 216 abgeleiteten Information hingegen um eine Information über einen bevorstehenden Abbiegevorgang, kann das Assistenzsystem 204 auf ein Navigationssystem des Fahrzeugs 200 mit und ohne Zieleingabe Einfluss nehmen, z. B., um den "Most Probable Path", also die wahrscheinlichste weitere Route, des Fahrzeugs 200 besser bestimmen zu können.

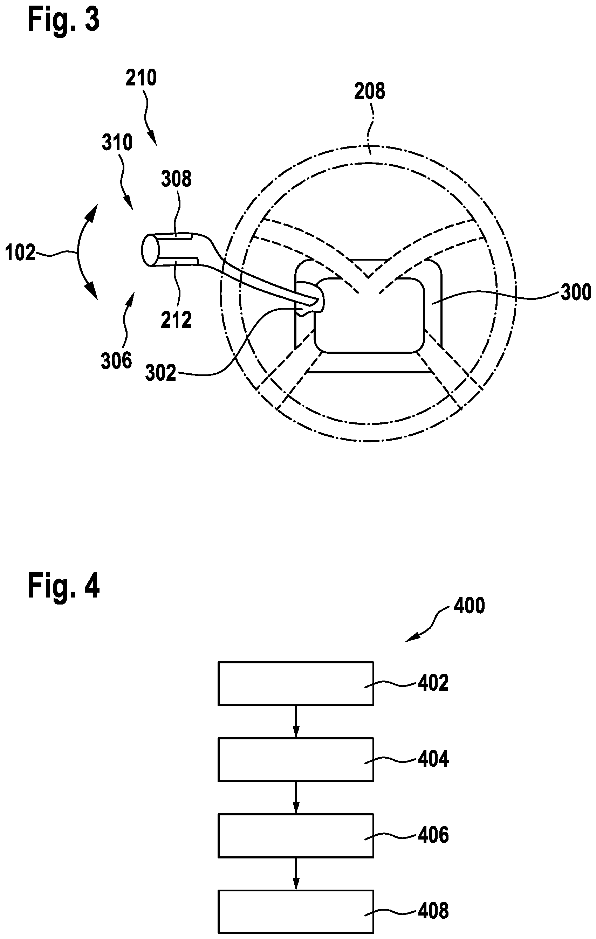

Fig. 3 zeigt eine schematische Darstellung einer beispielhaften Ausführung des Lenkrads 208 mit dem Lenkstockhebel 210 mit Fahrerwunscherkennung. Der Lenkstockhebel 210 ist an einem Lenkstock 300 eines Fahrzeugs angeordnet und erstreckt sich hinter dem - in Fig. 3 lediglich mittels Strichlinien angedeuteten - Lenkrad 208 nach links. So kann der Lenkstockhebel 210 an einem freien ersten Ende ohne Weiteres mit der linken Hand vom Lenkrad 208 aus von einem Fahrer des Fahrzeugs bedient oder betätigt werden. Das freie Ende bildet somit einen Betätigungs- oder Bedienbereich des Lenkstockhebels 210 aus.

Ein an dem Lenkstock 300 angeordnetes zweites Ende des Lenkstockhebels 210 ist mit einem Fahrtrichtungsanzeige- bzw. Blinkerschalter 302 des Fahrzeugs verbunden. Der Lenkstockhebel 210 ist in Fig. 3 in einer im Wesentlichen waagerechten Neutralposition gezeigt. Eine mittels eines Doppelpfeils in der Darstellung gekennzeichnete Betätigung 304 des Lenkstockhebels 210 aus der Neutralposition zum Schalten des Blinkerschalters 302 ist in zwei entgegengesetzte Richtungen, nach oben und nach unten, möglich.

Für das hierin vorgeschlagene Konzept zur Fahrerwunscherkennung ist zumindest der Sensor 212 am Lenkstockhebel 210 oder in der Nähe des Lenkstockhebels 210 vorgesehen. Bei dem in Fig. 3 gezeigten Ausführungsbeispiel des Konzepts sind zwei Sensoren vorgesehen. Der Sensor 212 ist bei dem - in Fig. 3 im montierten Zustand dargestellten - Lenkstockhebel 210 an einer Unterseite 306 des Betätigungsbereichs angeordnet, und ein weiterer Sensor 308 ist an einer Oberseite 310 des Betätigungsbereichs angeordnet.

Die Sensoren 212, 308 sind ausgebildet, um eine Bewegung einer Hand oder eines Fingers des Fahrers zu erfassen, wenn dieser im Begriff ist, den Lenkstockhebel 210 zum Ankündigen einer Fahrrichtungsänderung des Fahrzeugs zu betätigen. Damit kann die mittels der Sensoren 212, 308 am Lenkstockhebel 210 bereitgestellte Sensorik die gewünschte Information über den Fahrerwunsch bzw. die Fahrerintention aus der Position der Hand bzw. des Fingers des Fahrers relativ zum Lenkstockhebel 210 extrahieren.

Gemäß einem Ausführungsbeispiel ist einer der Sensoren 212, 308 oder sind beide Sensoren 212, 308 als berührungslose Sensoren ausgeführt und reagieren auf eine Annäherung der Hand oder Fingers an den Lenkstockhebel 210. Beispielsweise handelt es sich dann bei den Sensoren 212, 308 um kapazitive Sensoren oder optoelektronische Sensoren bzw. Helligkeitssensoren. Auch eine Ausführung in Form von Radar- oder Ultraschallsensoren ist denkbar.

Alternativ ist einer der Sensoren 212, 308 oder sind beide Sensoren 212, 308 als Drucksensoren ausgeführt und reagieren auf einen mit der Hand oder dem Finger ausgeübten Druck auf den Betätigungsbereich des Lenkstockhebels 210.

Im Einsatz des Lenkstockhebels 210 wird der Fahrer den Finger oder die Hand an die Unterseite 306 des Betätigungsbereichs des Lenkstockhebels 210 annähern oder den Druck auf diese erhöhen, wenn er zum Ankündigen eines Fahrtrichtungswechsels nach rechts den Lenkstockhebel 210 nach oben, also in Richtung eines Daches des zugeordneten Fahrzeugs, drücken will, um die rechtsseitigen Blinker des Fahrzeugs zu aktivieren. Entsprechend erfasst der Sensor 212 diese Annäherung bzw. Druckerhöhung und erzeugt das Betätigungsintentionssignal 214. Das Betätigungsintentionssignal 214 repräsentiert entsprechend eine Intention des Fahrers, die rechtsseitigen Blinker des Fahrzeugs zu setzen.

Alternativ wird der Fahrer den Finger oder die Hand an die Oberseite 310 des Betätigungsbereichs des Lenkstockhebels 210 annähern oder den Druck auf diese erhöhen, wenn er zum Ankündigen eines Fahrtrichtungswechsels nach links den Lenkstockhebel 210 nach unten, also in Richtung eines Bodens des zugeordneten Fahrzeugs, drücken will, um die linksseitigen Blinker des Fahrzeugs zu aktivieren. Entsprechend erfasst der weitere Sensor 308 diese Annäherung bzw. Druckerhöhung und erzeugt ein alternatives Betätigungsintentionssignal 214. Das alternative Betätigungsintentionssignal 214 repräsentiert hier entsprechend eine Intention des Fahrers, die linksseitigen Blinker des Fahrzeugs zu setzen.

Bei einer Ausführung als berührungslose Sensoren sind die Sensoren 212, 308 beispielsweise ausgebildet, um das Betätigungsintentionssignal 214 zu erzeugen, wenn ein vordefinierter Annäherungsschwellenwert für eine Annäherung der Hand oder des Fingers an den Lenkstockhebel 210 überschritten wird.

Bei einer Ausführung als Drucksensoren sind die Sensoren 212, 308 hingegen ausgebildet, um das Betätigungsintentionssignal 214 zu erzeugen, wenn ein vordefinierter Druckschwellenwert für einen mittels der Hand oder des Fingers auf den Betätigungsbereich des Lenkstockhebels 210 ausgeübten Druck überschritten wird.

Mit der gemäß dem hier vorgeschlagenen Konzept realisierten Integration der der Sensoren 212, 308 direkt an bzw. nahe dem Lenkstockhebel 210 wird die Analyse der Bedienhandlungen des Fahrers vorteilhaft in einer frühen Zeitphase der Aktivität zum Überholen oder Spurwechseln möglich gemacht. Wie bereits erwähnt, können die Sensoren 212, 308 sehr einfach realisiert werden, z. B. elektrisch - kapazitiv oder induktiv - oder aktiv optisch, z. B. unter Verwendung einer Sende- und Empfangsdiode. Ein Einsatz weiterer komplexerer Sensorkonzepte, z. B. Ultraschall, Radar, etc., ist ebenfalls denkbar.

Fig. 4 zeigt ein Ablaufdiagramm eines Ausführungsbeispiels eines Verfahrens 400 zum Erkennen einer Absicht eines Fahrers eines Fahrzeugs bezüglich eines Ausführens einer Spurwechselaktion und/oder Abbiegeaktion des Fahrzeugs. Das Verfahren 400 kann von der in Fig. 2 gezeigten Vorrichtung zum Erkennen eines Fahrerwunsches ausgeführt werden.

In einem Schritt des Erzeugens 402 wird ein Betätigungsintentionssignal, das eine Bewegung einer Hand oder eines Fingers des Fahrers in Bezug zu einem Blinkerhebel des Fahrzeugs repräsentiert, mittels eines dem Blinkerhebel zugeordneten Sensors erzeugt, wenn ein vordefinierter Annäherungsschwellenwert für eine Annäherung der Hand oder des Fingers an den Lenkstockhebel und/oder ein vordefinierter Druckschwellenwert für einen mittels der Hand oder des Fingers auf den Lenkstockhebel ausgeübten Druck überschritten wird.

In einem Schritt des Einlesens 404 liest die Vorrichtung zum Erkennen eines Fahrerwunsches das Betätigungsintentionssignal über eine geeignete Schnittstelle ein.

In einem Schritt des Ermitteins 406 ermittelt die Vorrichtung unter Verwendung des Betätigungsintentionssignals ein Absichtsinformationssignal, das eine Information über die Absicht des Fahrers repräsentiert.

In einem Schritt des Bereitstellens 408 stellt die Vorrichtung das Absichtsinformationssignal über eine weitere geeignete Schnittstelle an ein Informationssystem und/oder Assistenzsystem und/oder Sicherheitssystem des Fahrzeugs bereit.

Gemäß einem Ausführungsbeispiel des Verfahrens 400 werden der Schritt 402 des Erzeugens des Betätigungsintentionssignals und der Schritt 404 des Einlesens des Betätigungsintentionssignals wiederholt ausgeführt, bevor in dem Schritt 406 des Ermitteins das Absichtsinformationssignal unter Verwendung einer Mehlzahl der Betätigungsintentionssignale ermittelt wird.

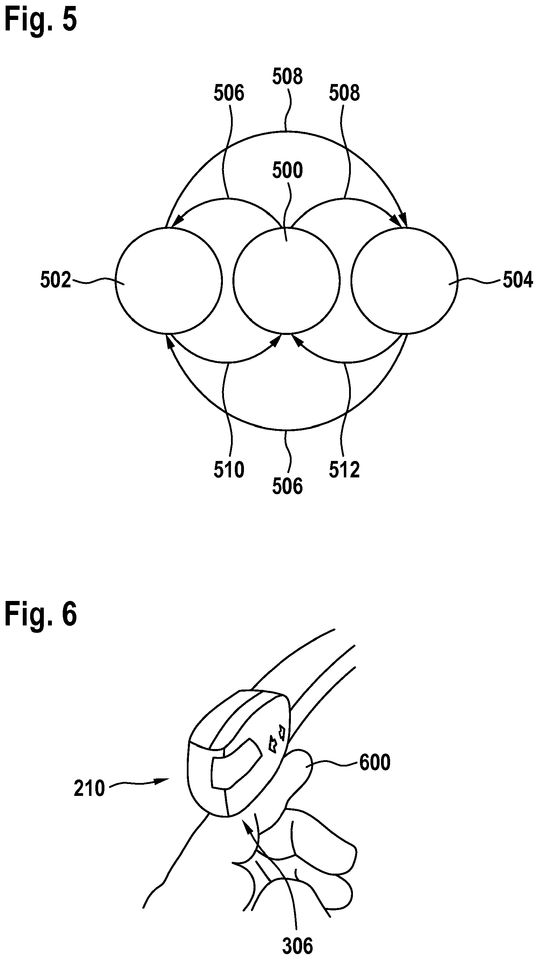

Fig. 5 zeigt ein beispielhaftes Schema zur Veranschaulichung einer Beziehung zwischen Betätigungsintentionssignalen der in Fig. 3 vorgestellten Sensoren zur Erfassung von Bedienhandlungen in Bezug zu einem Lenkstockhebel und aus den Betätigungsintentionssignalen abgeleiteten Absichtsinformationssignalen der in Fig. 2 vorgestellten Vorrichtung zum Erkennen eines Fahrerwunsches. Die in Fig. 5 illustrierte beispielhafte Logik stellt die Beziehung zwischen den Betätigungsintentionssignalen und den Absichtsinformationssignalen sowie mögliche Übergänge dar. Das Schema in Fig. 5 basiert beispielhaft auf Schwellenwertüber- bzw. -unterschreitungen von dem Lenkstockhebel zugeordneten berührungslosen Sensoren, die wie in Fig. 3 gezeigt an einer Oberseite und einer Unterseite eines Betätigungsbereichs des Lenkstockhebels angeordnet sind.

Ein mittiger Kreis in der Darstellung in Fig. 5 symbolisiert eine im Wesentlichen waagerechte Neutralposition 500 des Lenkstockhebels.

Ein linker Kreis in der Darstellung in Fig. 5 symbolisiert eine untere Aktivierungsposition 502 des Lenkstockhebels. In der unteren Aktivierungsposition 502 ist der Lenkstockhebel nach unten an einen unteren Endanschlag oder einen unteren Zwischen-Druckpunkt gedrückt. In der unteren Aktivierungsposition 502 sind die linksseitigen Fahrtrichtungsanzeiger des zugeordneten Fahrzeugs aktiv und blinken.

Ein rechter Kreis in der Darstellung in Fig. 5 symbolisiert eine obere Aktivierungsposition 504 des Lenkstockhebels. In der oberen Aktivierungsposition 504 ist der Lenkstockhebel nach oben an einen oberen Endanschlag oder einen oberen Zwischen-Druckpunkt gedrückt. In der oberen Aktivierungsposition 504 sind die rechtsseitigen Fahrtrichtungsanzeiger des zugeordneten Fahrzeugs aktiv und blinken.

Ausgehend von der Neutralposition 500 repräsentiert eine mittels eines ersten Pfeils in der Darstellung in Fig. 5 gekennzeichnete Schwellenwertüberschreitung 506 des Signals des oberen berührungslosen Sensors eine erhöhte Wahrscheinlichkeit eines bevorstehenden Spurwechsels nach links oder eines bevorstehenden Überholmanövers oder eines bevorstehenden Abbiegevorgangs nach links.

Wiederum ausgehend von der Neutralposition 500 des Lenkstockhebels repräsentiert eine mittels eines zweiten Pfeils in der Darstellung in Fig. 5 gekennzeichnete Schwellenwertüberschreitung 508 des Signals des unteren - weiteren - berührungslosen Sensors eine erhöhte Wahrscheinlichkeit eines bevorstehenden Spurwechsels nach rechts oder eines bevorstehenden Abbiegevorgangs nach rechts.

Ausgehend von der oberen Aktivierungsposition 504 des Lenkstockhebels kennzeichnet ein dritter Pfeil in der Darstellung in Fig. 5 ebenfalls die Schwellenwertüberschreitung 506 des Signals des oberen berührungslosen Sensors, die eine erhöhte Wahrscheinlichkeit eines bevorstehenden Spurwechsels nach links oder eines bevorstehenden Überholmanövers oder eines bevorstehenden Abbiegevorgangs nach links anzeigt.

Ausgehend von der unteren Aktivierungsposition 502 des Lenkstockhebels kennzeichnet ein vierter Pfeil in der Darstellung in Fig. 5 ebenfalls die Schwellenwertüberschreitung 508 des Signals des unteren berührungslosen Sensors, die eine erhöhte Wahrscheinlichkeit eines bevorstehenden Spurwechsels nach rechts oder eines bevorstehenden Abbiegevorgangs nach rechts anzeigt.

Ausgehend von der unteren Aktivierungsposition 502 des Lenkstockhebels repräsentiert eine mittels eines fünften Pfeils in der Darstellung in Fig. 5 gekennzeichnete Schwellenwertunterschreitung 510 des Signals des oberen berührungslosen Sensors eine erhöhte Wahrscheinlichkeit einer bevorstehenden Vollendung des Spurwechsels nach links oder des Überholmanövers oder des Abbiegevorgangs nach links.

Ausgehend von der oberen Aktivierungsposition 504 des Lenkstockhebels repräsentiert eine mittels eines sechsten Pfeils in der Darstellung in Fig. 5 gekennzeichnete Schwellenwertunterschreitung 512 des Signals des unteren berührungslosen Sensors eine erhöhte Wahrscheinlichkeit einer bevorstehenden Vollendung des Spurwechsels nach rechts oder des Abbiegevorgangs nach rechts.

Gemäß einem Ausführungsbeispiel sind die Übergangsschwellen der Signale mit einer Hysterese versehen oder die Übergänge zwischen Zuständen mit Verzögerungsgliedern versehen, um schnelle Wechsel des Systems zu verhindern, die zu nachteiligen Effekten, z. B. Flackern von Anzeigen, führen könnten.

Die in Fig. 5 gezeigte beispielhafte Logik ist nicht vollständig, so kann es mindestens noch den Zustand geben, bei dem die Wahrscheinlichkeit erhöht ist, dass es zu einem Spurwechsel- oder Abbiegevorgang kommen kann, ohne dass die Richtung vorhergesagt wird. Dieser Zustand könnte aus allen in Fig. 5 dargestellten Zuständen bei einer Schwellenwertüberschreitung beider Sensoren erreicht werden und in einen der drei zurückfallen, falls bestimmte Bedingungen erfüllt sind.

So können die Schwellenwertüberschreitung 506 und die gleichzeitige Schwellenwertunterschreitung 512 eine erhöhte Wahrscheinlichkeit eines bevorstehenden Spurwechsels nach links oder eines bevorstehenden Überholmanövers oder eines bevorstehenden Abbiegevorgangs nach links anzeigen.

Die Schwellenwertüberschreitung 508 und die gleichzeitige Schwellenwertunterschreitung 510 können eine erhöhte Wahrscheinlichkeit eines bevorstehenden Spurwechsels nach rechts oder eines bevorstehenden Abbiegevorgangs nach rechts anzeigen.

Die Schwellenwertunterschreitung 510 und die gleichzeitige Schwellenwertunterschreitung 512 können eine erhöhte Wahrscheinlichkeit zur Rückkehr des Lenkstockhebels in die Neutralposition anzeigen.

Eine weitere Ausführungsvariante setzt eine mehrstufige bzw. stufenlose Sensierung ein. Beispielsweise kann eine Druckintensität bzw. Größe einer Auflagefläche z. B. des Fingers auf den Sensoren zur Berechnung der Wahrscheinlichkeit mit genutzt werden. So kann ein starker Druck bzw. eine große Auflagefläche anzeigen, dass eine Blinkerbetätigung unmittelbar bevorsteht.

Figuren 6 bis 10 zeigen beispielhafte Darstellungen typischer Hand- bzw. Fingerbewegungen bei der Vorbetätigung zum Bedienen eines Lenkstockhebels zum Anzeigen einer Spurwechselaktion und/oder einer Abbiegeaktion eines Fahrzeugs.

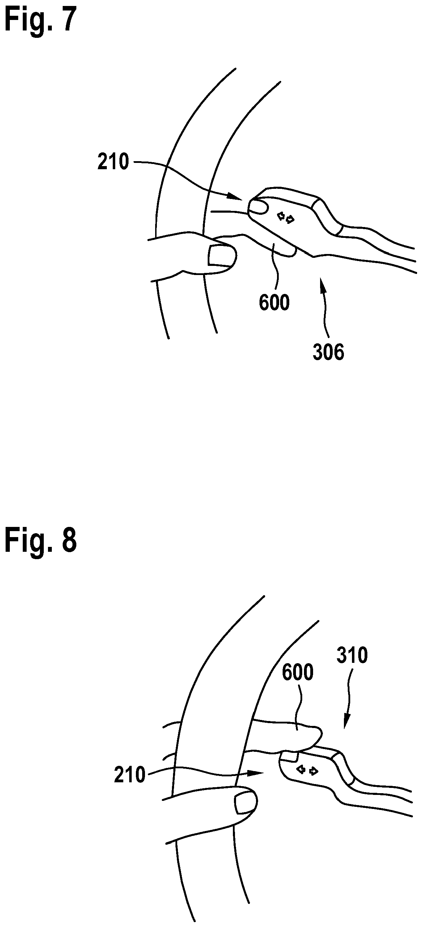

Figuren 6 und 7 zeigen aus verschiedenen Perspektiven eine typische Vorbetätigung zum Umsetzen eines Fahrerwunsches, die rechtsseitigen Blinker des Fahrzeugs zu setzen. Ein Finger 600, hier der Zeigefinger 600, der linken Hand des Fahrers nähert sich dem an der Unterseite 306 des Betätigungsbereichs des Lenkstockhebels 210 angeordneten Sensor an bzw. erhöht den Druck auf den an der Unterseite 306 angeordneten Sensor.

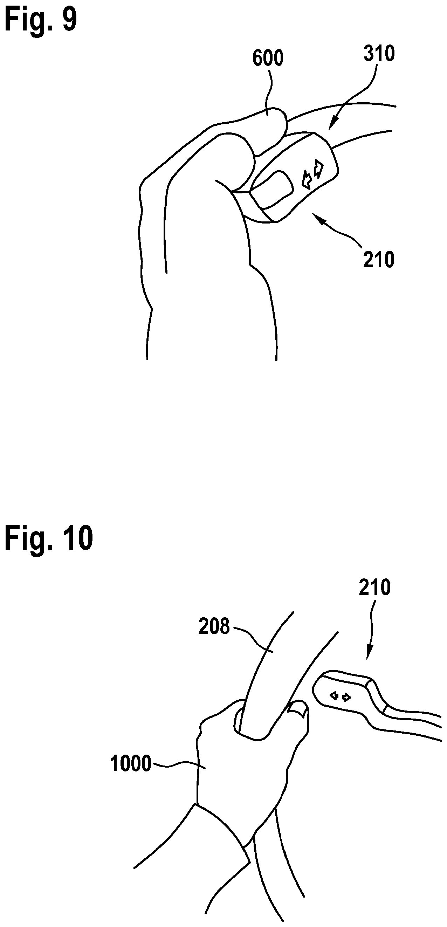

Figuren 8 und 9 zeigen aus verschiedenen Perspektiven eine typische Vorbetätigung zum Umsetzen eines Fahrerwunsches, die linksseitigen Blinker des Fahrzeugs zu setzen. Hier nähern sich der Zeigefinger 600 und der Mittelfinger der linken Hand des Fahrers dem an der Oberseite 310 des Betätigungsbereichs des Lenkstockhebels 210 angeordneten weiteren Sensor an bzw. erhöhen den Druck auf den an der Oberseite 310 angeordneten weiteren Sensor.

Fig. 10 zeigt eine linke Hand 1000 des Fahrers in Neutralhaltung. Hier umfasst die linke Hand 1000 das Lenkrad 208, und es findet keine Annäherung an den Betätigungsbereich des Lenkstockhebels 210 statt.

Das hier vorgestellte Konzept ermöglicht eine Erkennung eines Fahrerwunsches anhand der gesamten Bedienhandlung am Lenkstockhebel bzw. Blinkerhebel bereits vor der abschließenden Betätigung, die beispielsweise durch das Überschreiten einer Schaltschwelle "Einrasten des Blinkers" gekennzeichnet ist. Diese Information kann genutzt werden, um Fahrerinformations-, Assistenz- und Sicherheitssysteme zu verbessern, indem die situative Unschärfe vermindert wird.

Die hierin vorgestellte Sensorik ist direkt nachweisbar. Funktionen der oben beschriebenen Art sind über das HMI-Konzept direkt erlebbar und nachweisbar.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (400) zum Erkennen einer Absicht eines Fahrers (100) eines Fahrzeugs (200) bezüglich eines Ausführens einer Spurwechselaktion und/oder einer Abbiegeaktion des Fahrzeugs (200), wobei das Verfahren (400) die folgenden Schritte aufweist:
- Erzeugen (402) eines Betätigungsintentionssignals (214) mittels zumindest eines an einem Bedienelement (210) angeordneten oder anordenbaren Sensors (212; 308), wobei der Sensor (212; 308) ausgebildet ist, um das Betätigungsintentionssignal (214) zu erzeugen, wenn ein vordefinierter Annäherungsschwellenwert für eine Annäherung einer Hand (1000) oder eines Fingers (600) an das Bedienelement (210) und/oder ein vordefinierter Druckschwellenwert für einen mittels der Hand (1000) oder des Fingers (600) auf das Bedienelement (210) ausgeübten Druck überschritten wird;
- Einlesen (404) des Betätigungsintentionssignals (214), das eine Bewegung der Hand (1000) oder des Fingers (600) des Fahrers (100) in Bezug zu dem Bedienelement (210) für eine Fahrtrichtungsanzeige des Fahrzeugs (200) mit der Intention, das Bedienelement (210) zum Anzeigen der Absicht zu betätigen, repräsentiert; und
- Ermitteln (406) eines Absichtsinformationssignals (216) unter Verwendung des Betätigungsintentionssignals (214), wobei das Absichtsinformationssignal (216) eine Information über die Absicht des Fahrers (100) repräsentiert;
**dadurch gekennzeichnet, dass**
als der Annäherungsschwellenwert und/oder der Druckschwellenwert ein mit einer Hysterese beaufschlagter Schwellenwert verwendet wird.

2. Verfahren (400) gemäß Anspruch 1, **gekennzeichnet durch** einen Schritt des Bereitstellens (408) des Absichtsinformationssignals (216) an ein Informationssystem (204) und/oder Assistenzsystem (204) und/oder Sicherheitssystem (204) des Fahrzeugs (200).

3. Verfahren (400) gemäß Anspruch 1 oder 2, **dadurch gekennzeichnet, dass** in dem Schritt des Erzeugens (402) ein kapazitiver Sensor oder ein optoelektronischer Sensor oder ein Ultraschallsensor oder ein Radarsensor als der Sensor (212; 308) zum Erzeugen (402) des Betätigungsintentionssignals (214) eingesetzt wird.

4. Verfahren (400) gemäß einem der Ansprüche 1 bis 3, **dadurch gekennzeichnet, dass** der Schritt des Erzeugens (402) des Betätigungsintentionssignals (214) und der Schritt des Einlesens (404) des Betätigungsintentionssignals (214) wiederholt ausgeführt werden, bevor der Schritt des Ermitteins (406) des Absichtsinformationssignals (216) ausgeführt wird, wobei in dem Schritt des Ermitteins (406) das Absichtsinformationssignal (216) unter Verwendung einer Mehlzahl der Betätigungsintentionssignale (214) ermittelt wird.

5. Verfahren (400) gemäß einem der Ansprüche 1 bis 4, **dadurch gekennzeichnet, dass** in dem Schritt des Erzeugens (402) das Betätigungsintentionssignal (214) als ein Betätigungsintentionssignal erzeugt wird, das die Bewegung der Hand (1000) oder des Fingers (600) des Fahrers (100) als eine zu einem Dach des Fahrzeugs (200) gerichtete Bewegung zum Setzen eines in einer Fahrtrichtung des Fahrzeugs (200) rechtsseitigen Fahrtrichtungsanzeigers des Fahrzeugs (200) identifiziert, wobei ein bei im Fahrzeug (200) montiertem Bedienelement (210) an einer Unterseite (306) des Bedienelements (210) angeordneter oder anordenbarer Sensor (212) den Sensor repräsentiert.

6. Verfahren (400) gemäß einem der Ansprüche 1 bis 5, **dadurch gekennzeichnet, dass** in dem Schritt des Erzeugens (402) das Betätigungsintentionssignal (214) als ein Betätigungsintentionssignal erzeugt wird, das die Bewegung der Hand (1000) oder des Fingers (600) des Fahrers (100) als eine zu einem Boden des Fahrzeugs (200) gerichtete Bewegung zum Setzen eines in der Fahrtrichtung des Fahrzeugs (200) linksseitigen Fahrtrichtungsanzeigers (213) des Fahrzeugs (200) identifiziert, wobei ein bei im Fahrzeug (200) montiertem Bedienelement (210) an einer Oberseite (310) des Bedienelements (210) angeordneter oder anordenbarer weiterer Sensor (308) den Sensor repräsentiert.

7. Verfahren (400) gemäß einem der vorangegangenen Ansprüche, **gekennzeichnet durch** einen Schritt des Einlesens eines Aktionsbeendigungssignals, das eine zu der Bewegung entgegengesetzte weitere Bewegung der Hand (1000) oder des Fingers (600) des Fahrers (100) des Fahrzeugs (200) in Bezug zu dem Bedienelement (210) mit der Intention, das Bedienelement (210) zum Beenden des Anzeigens der Absicht freizugeben, repräsentiert und einen Schritt des Ermitteins eines Beendigungsinformationssignals unter Verwendung des Aktionsbeendigungssignals, wobei das Beendigungsinformationssignal eine Information über das Beenden des Anzeigens der Absicht durch den Fahrer (100) repräsentiert, und einen Schritt des Bereitstellens des Aktionsbeendigungssignals an ein Informationssystem (204) und/oder Assistenzsystem (204) und/oder Sicherheitssystem (204) des Fahrzeugs (200).

8. Verfahren (400) gemäß Anspruch 7, **gekennzeichnet durch** einen Schritt des Erzeugens des Aktionsbeendigungssignals mittels des zumindest einen an dem Bedienelement (210) angeordneten oder anordenbaren Sensors (212; 308), wobei der Sensor (212; 308) ausgebildet ist, um das Aktionsbeendigungssignal zu erzeugen, wenn der vordefinierte Annäherungsschwellenwert für eine Annäherung der Hand (1000) oder des Fingers (600) an das Bedienelement (210) und/oder dervordefinierte Druckschwellenwert für einen mittels der Hand (1000) oder des Fingers (600) auf den Bedienelement (210) ausgeübten Druck unterschritten wird.

9. Vorrichtung (206), die eingerichtet ist, das Verfahren (400) gemäß einem der vorangegangenen Ansprüche auszuführen.

10. Bedienelement (210) zum Betätigen einer Fahrtrichtungsanzeige eines Fahrzeugs (200), wobei der Bedienelement (210) die folgenden Merkmale aufweist:
- eine Vorrichtung (206) gemäß Anspruch 9; und
- zumindest einen Sensor (212; 308), der bei im Fahrzeug (200) montiertem Bedienelement (210) an einer Unterseite (306) oder einer Oberseite (310) des Bedienelements (210) angeordnet oder anordenbar ist.

11. System (202) zum Verarbeiten einer Absicht eines Fahrers (100) eines Fahrzeugs (200) bezüglich eines Ausführens einer Spurwechselaktion und/oder einer Abbiegeaktion des Fahrzeugs (200), wobei das System (202) die folgenden Merkmale aufweist:
- eine Vorrichtung (206) gemäß Anspruch 9; und
- ein Informationssystem (204) und/oder Assistenzsystem (204) und/oder Sicherheitssystem (204), das mit der Vorrichtung (206) gekoppelt oder koppelbar ist und ausgebildet ist, um abhängig von einem mittels der Vorrichtung (206) bereitgestellten Absichtsinformationssignal (216) ein Reaktionsmuster auszuführen.

12. Computerprogramm, das dazu eingerichtet ist, das Verfahren (400) gemäß einem der vorangegangenen Ansprüche 1 bis 8 auszuführen.

## Claims

1. Method (400) for detecting an intention of a driver (100) of a vehicle (200) to implement a lane-changing action and/or a turning-off action of the vehicle (200), the method (400) including the following steps:
- generating (402) an actuation intent signal (214) by means of at least one sensor (212; 308) that is arranged or arrangeable at an operating element (210), wherein the sensor (212; 308) is embodied to generate the actuation intent signal (214) when a predefined approach threshold for an approach of a hand (1000) or a finger (600) to the operating element (210) and/or a predefined pressure threshold for a pressure exerted on the operating element (210) by means of the hand (1000) or the finger (600) are/is exceeded;
- reading (404) the actuation intent signal (214), which represents a movement of the hand (1000) or of the finger (600) of the driver (100) in relation to the operating element (210) for a direction indicator of the vehicle (200) with the intention of actuating the operating element (210) for the purposes of indicating the intention; and
- determining (406) an intention information signal (216) using the actuation intent signal (214), the intention information signal (216) representing information about the intention of the driver (100); **characterized in that**
a threshold exhibiting hysteresis is used as the approach threshold and/or the pressure threshold.

2. Method (400) according to Claim 1, **characterized by** a step of providing (408) the intention information signal (216) to an information system (204) and/or assistance system (204) and/or safety system (204) of the vehicle (200).

3. Method (400) according to Claim 1 or 2, **characterized in that** a capacitive sensor or an optoelectronic sensor or an ultrasonic sensor or a radar sensor is used in the generating step (402) as the sensor (212; 308) for generating (402) the actuation intent signal (214).

4. Method (400) according to any one of Claims 1 to 3, **characterized in that** the step of generating (402) the actuation intent signal (214) and the step of reading (404) the actuation intent signal (214) are carried out repeatedly before the step of determining (406) the intention information signal (216) is carried out, wherein the intention information signal (216) is determined using a multiplicity of the actuation intent signals (214) in the determining step (406).

5. Method (400) according to any one of Claims 1 to 4, **characterized in that** the actuation intent signal (214) is generated within the generating step (402) as an actuation intent signal which identifies the movement of the hand (1000) or of the finger (600) of the driver (100) as a movement directed to a roof of the vehicle (200) for setting a right-hand side direction indicator of the vehicle (200), as seen in a direction of travel of the vehicle (200), wherein a sensor (212) that is arranged or arrangeable on a lower side (306) of the operating element (210) when the operating element (210) is assembled in the vehicle (200) represents the sensor.

6. Method (400) according to any one of Claims 1 to 5, **characterized in that** the actuation intent signal (214) is generated within the generating step (402) as an actuation intent signal which identifies the movement of the hand (1000) or of the finger (600) of the driver (100) as a movement directed to a floor of the vehicle (200) for setting a left-hand side direction indicator (213) of the vehicle (200), as seen in the direction of travel of the vehicle (200), wherein a further sensor (308) that is arranged or arrangeable on an upper side (310) of the operating element (210) when the operating element (210) is assembled in the vehicle (200) represents the sensor.

7. Method (400) according to any one of the preceding claims, **characterized by** a step of reading an action termination signal, which represents a further movement, counter to the movement, of the hand (1000) or of the finger (600) of the driver (100) of the vehicle (200) in relation to the operating element (210) with the intent of releasing the operating element (210) for the purposes of terminating the display of the intention, and by a step of determining a termination information signal using the action termination signal, with the termination information signal representing information about the termination of the indication of the intention by the driver (100), and a step of providing the action termination signal to an information system (204) and/or assistance system (204) and/or safety system (204) of the vehicle (200).

8. Method (400) according to Claim 7, **characterized by** a step of generating the action termination signal by means of the at least one sensor (212; 308) that is arranged or arrangeable at the operating element (210), wherein the sensor (212; 308) is embodied to generate the action termination signal when the predefined approach threshold for an approach of the hand (1000) or of the finger (600) to the operating element (210) and/or the predefined pressure threshold for a pressure exerted by means of the hand (1000) or of the finger (600) on the operating element (210) are/is undershot.

9. Apparatus (206) set up to carry out the method (400) according to any one of the preceding claims.

10. Operating element (210) for actuating a direction indicator of a vehicle (200), the operating element (210) having the following features:
- an apparatus (206) according to Claim 9; and
- at least one sensor (212; 308) that is arranged or arrangeable on a lower side (306) or an upper side (310) of the operating element (210) when the operating element (210) is assembled in the vehicle (200).

11. System (202) for processing an intention of a driver (100) of a vehicle (200) to implement a lane-changing action and/or a turning-off action of the vehicle (200), the system (202) having the following features:
- an apparatus (206) according to Claim 9; and
- an information system (204) and/or assistance system (204) and/or safety system (204) that is coupled or able to be coupled to the apparatus (206) and that is embodied to carry out a reaction pattern depending on an intention information signal (216) provided by means of the apparatus (206).

12. Computer program set up to execute the method (400) according to any one of preceding Claims 1 to 8.

## Revendications

1. Procédé (400) permettant de reconnaître une intention d'un conducteur (100) d'un véhicule (200) par rapport à l'exécution d'une action de changement de voie et/ou d'une action de changement de direction du véhicule (200), le procédé (400) présentant les étapes suivantes consistant à :
- générer (402) un signal d'intention d'actionnement (214) au moyen d'au moins un capteur (212 ; 308) disposé ou pouvant être disposé sur un élément de commande (210), le capteur (212 ; 308) étant réalisé pour générer le signal d'intention d'actionnement (214) si une valeur seuil d'approche prédéfinie pour une main (1000) ou un doigt (600) s'approchant de l'élément de commande (210) et/ou une valeur seuil de pression prédéfinie pour une pression exercée sur l'élément de commande (210) au moyen de la main (1000) ou du doigt (600) est/sont dépassée(s) ;
- lire (404) le signal d'intention d'actionnement (214) qui représente un mouvement de la main (1000) ou du doigt (600) du conducteur (100) relativement à l'élément de commande (210) pour un affichage de direction du véhicule (200) avec l'intention d'actionner l'élément de commande (210) pour afficher l'intention d'actionnement ; et
- déterminer (406) un signal d'information d'intention (216) en utilisant le signal d'intention d'actionnement (214), le signal d'information d'intention (216) représentant une information concernant l'intention du conducteur (100) ; **caractérisé en ce qu'**une valeur seuil à laquelle est appliquée une hystérésis est utilisée comme valeur seuil d'approche et/ou comme valeur seuil de pression.

2. Procédé (400) selon la revendication 1, **caractérisé par** une étape de fourniture (408) du signal d'information d'intention (216) à un système d'information (204) et/ou à un système d'assistance (204) et/ou à un système de sécurité (204) du véhicule (200) .

3. Procédé (400) selon la revendication 1 ou 2, **caractérisé en ce qu'**à l'étape de génération (402), un capteur capacitif ou un capteur optoélectronique ou un capteur à ultrasons ou un capteur radar est mis en œuvre en tant que capteur (212 ; 308) pour générer (402) le signal d'intention d'actionnement (214).

4. Procédé (400) selon l'une quelconque des revendications 1 à 3, **caractérisé en ce que** l'étape de génération (402) du signal d'intention d'actionnement (214) et l'étape de lecture (404) du signal d'intention d'actionnement (214) sont effectuées de manière répétée avant que l'étape de détermination (406) du signal d'information d'intention (216) ne soit effectuée, dans lequel, à l'étape de détermination (406), le signal d'information d'intention (216) est déterminé en utilisant une pluralité des signaux d'intention d'actionnement (214).

5. Procédé (400) selon l'une quelconque des revendications 1 à 4, **caractérisé en ce qu'**à l'étape de génération (402), le signal d'intention d'actionnement (214) est généré comme un signal d'intention d'actionnement qui identifie le mouvement de la main (1000) ou du doigt (600) du conducteur (100) comme un mouvement dirigé vers un toit du véhicule (200) pour activer un indicateur de direction du véhicule (200) à droite dans le sens de la marche du véhicule (200), dans lequel, lorsqu'un élément de commande (210) est installé sur le véhicule (200), un capteur (212) disposé ou pouvant être disposé sur une face inférieure (306) de l'élément de commande (210) représente le capteur.

6. Procédé (400) selon l'une quelconque des revendications 1 à 5, **caractérisé en ce qu'**à l'étape de génération (402), le signal d'intention d'actionnement (214) est généré comme un signal d'intention d'actionnement qui identifie le mouvement de la main (1000) ou du doigt (600) du conducteur (100) comme un mouvement dirigé vers un plancher du véhicule (200) pour activer un indicateur de direction (213) du véhicule (200) à gauche dans le sens de la marche du véhicule (200), dans lequel, lorsque l'élément de commande (210) est installé sur le véhicule (200), un autre capteur (308) disposé ou pouvant être disposé sur une face supérieure (310) de l'élément de commande (210) représente le capteur.

7. Procédé (400) selon l'une quelconque des revendications précédentes, **caractérisé par** une étape de lecture d'un signal de fin d'action qui représente un autre mouvement, opposé audit mouvement, de la main (1000) ou du doigt (600) du conducteur (100) du véhicule (200) relativement à l'élément de commande (210) avec l'intention de libérer l'élément de commande (210) pour terminer l'affichage de l'intention, et par une étape de détermination d'un signal d'information de fin en utilisant le signal de fin d'action, le signal d'information de fin représentant une information concernant la fin de l'affichage de l'intention par le conducteur (100), et par une étape de fourniture du signal de fin d'action à un système d'information (204) et/ou à un système d'assistance (204) et/ou à un système de sécurité (204) du véhicule (200).

8. Procédé (400) selon la revendication 7, **caractérisé par** une étape de génération du signal de fin d'action au moyen du capteur (212 ; 308) disposé ou pouvant être disposé sur l'élément de commande (210), le capteur (212 ; 308) étant réalisé pour générer le signal de fin d'action si la valeur seuil d'approche prédéfinie pour approcher la main (1000) ou le doigt (600) de l'élément de commande (210) et/ou la valeur seuil de pression prédéfinie pour une pression exercée au moyen de la main (1000) ou du doigt (600) sur l'élément de commande (210) est/sont soupassée(s).

9. Dispositif (206) conçu pour effectuer le procédé (400) selon l'une quelconque des revendications précédentes.

10. Elément de commande (210) permettant d'actionner un indicateur de direction d'un véhicule (200), l'élément de commande (210) présentant les particularités suivantes :
- un dispositif (206) selon la revendication 9 ; et
- au moins un capteur (212 ; 308) qui est disposé ou peut être disposé sur une face inférieure (306) ou une face supérieure (310) de l'élément de commande (210) lorsque l'élément de commande (210) est installé sur le véhicule (200).

11. Système (202) permettant de traiter une intention d'un conducteur (100) d'un véhicule (200) par rapport à l'exécution d'une action de changement de voie et/ou d'une action de changement de direction du véhicule (200), le système (202) présentant les particularités suivantes :
- un dispositif (206) selon la revendication 9 ; et
- un système d'information (204) et/ou un système d'assistance (204) et/ou un système de sécurité (204) qui est/sont ou peut/peuvent être couplé(s) au dispositif (206) et est/sont réalisé(s) pour effectuer un schéma de réaction en fonction d'un signal d'information d'intention (216) fourni au moyen du dispositif (206).

12. Programme informatique qui est conçu pour effectuer le procédé (400) selon l'une quelconque des revendications précédentes 1 à 8.
